# EUROPÄISCHE PATENTSCHRIFT

(11) **EP 4 460 865 B1**
(45) Veröffentlichungstag und Bekanntmachung des Hinweises auf die Patenterteilung: **20.05.2026**
(21) Anmeldenummer: 23710253.8
(22) Anmeldetag: 03.03.2023
(51) Int. Cl.: H01M 10/613, H01M 10/6555, H01M 10/6557, H01M 50/209, B60L 50/64, H01M 10/625, H01M 50/249, H01M 50/258, H01M 50/262, H01M 10/6556

(54) **ENERGIESPEICHERMODUL, ENERGIESPEICHERANORDNUNG UND FAHRZEUG MIT ENERGIESPEICHERANORDNUNG SOWIE VERFAHREN ZUM AUSTAUSCH EINES ENERGIESPEICHERMODULS EINER ENERGIESPEICHERANORDNUNG EINES FAHRZEUGS**
ENERGY STORAGE MODULE, ENERGY STORAGE ASSEMBLY AND VEHICLE WITH AN ENERGY STORAGE ASSEMBLY, AS WELL AS A METHOD FOR EXCHANGING AN ENERGY STORAGE MODULE OF AN ENERGY STORAGE ASSEMBLY OF A VEHICLE
MODULE DE STOCKAGE D'ÉNERGIE, ENSEMBLE DE STOCKAGE D'ÉNERGIE ET VÉHICULE ÉQUIPÉ D'UN ENSEMBLE DE STOCKAGE D'ÉNERGIE ET PROCÉDÉ DE REMPLACEMENT D'UN MODULE DE STOCKAGE D'ÉNERGIE D'UN ENSEMBLE DE STOCKAGE D'ÉNERGIE D'UN VÉHICULE

(30) Priorität: 11.04.2022 DE 102022203625
(43) Veröffentlichungstag der Anmeldung: 13.11.2024
(73) Patentinhaber: Siemens Mobility GmbH, 80997 München (DE)
(72) Erfinder: KRICKAU, Andreas, 91088 Bubenreuth (DE); MEYER, Christian, 91282 Betzenstein (DE); TEICHMANN, Stefan, 91475 Lonnerstadt (DE)
(74) Vertreter: Siemens Patent Attorneys
(86) Internationale Anmeldenummer: PCT/EP2023/055420
(87) Internationale Veröffentlichungsnummer: WO 2023/198356

(56) Entgegenhaltungen:
- WO-A1-2020/256303
- KR-B1- 102 263 291
- US-A1- 2023 072 733
- US-B2- 10 629 967

## Beschreibung

Die Erfindung betrifft ein Energiespeichermodul, eine Energiespeicheranordnung, ein Fahrzeug mit Energiespeicheranordnung und ein Verfahren zum Austausch eines Energiespeichermoduls einer Energiespeicheranordnung eines Fahrzeugs.

Eine Energiespeicheranordnung ist insbesondere an einem Fahrzeug mit Elektroantrieb montierbar, wobei ein oder mehrere Energiespeicher, beispielsweise Batterien, Energie zum Betreiben eines oder mehrerer Elektromotoren des Fahrzeugs bereitstellen. Ein solches Fahrzeug kann insbesondere auch ein spurgebundenes Fahrzeug, also ein Schienenfahrzeug, beispielsweise eine Straßenbahn sein.

Elektrofahrzeuge, die ausschließlich mit einem Elektromotor betrieben, bzw. angetrieben werden oder so genannte Hybridfahrzeuge, die zusätzlich zu einem Verbrennungsmotor noch einen oder mehrere Elektromotoren aufweisen, benötigen zur Bereitstellung von elektrischer Energie zum Betreiben des Elektromotors bzw. Traktionsmotors entsprechend dimensionierte Energiespeicheranordnungen, beispielsweise eine oder mehrere Batterie(n) bzw. Batteriezellen, die auch als Traktionsbatterie(n) bezeichnet wird bzw. werden. Dies ist insbesondere bei spurgebundenen Fahrzeugen, wie beispielsweise Triebzügen, notwendig, welche neben elektrifizierten Streckenabschnitten, bei denen die elektrische Versorgung beispielsweise mittels einer Oberleitung gewährleistet ist, ggf. auch nicht elektrifizierte Strecken bzw. Streckenabschnitte befahren.

Solche Energiespeicheranordnungen umfassen üblicherweise ein oder mehrere Energiespeichermodule, insbesondere Batteriemodule bzw. Batteriestränge mit jeweils einer Mehrzahl von Batteriezellen, die untereinander verschaltet werden, bzw. sind. Zur Unterbringung in oder an dem Fahrzeug benötigen die Energiespeicheranordnungen einen vergleichsweise großen Bauraum, weshalb diese bevorzugt, beispielsweise an einem Wagenkasten, insbesondere auf dem Dach oder im Unterflurbereich des Wagenkastens angeordnet werden, wobei insbesondere Anforderungen bezüglich des Gesamtgewichts und der Abmaße zu beachten sind.

Um eine Überhitzung solcher Energiespeicheranordnungen, beispielsweise einer Traktionsbatterie, bestehend aus mehreren Energiespeichermodulen bzw. Batteriemodulen mit mehreren Batteriezellen, aufgrund einer beim Laden oder Entladen entstehenden hohen Verlustleistung zu verhindern, und damit deren Lebensdauer zu erhöhen, ist es erforderlich, diese mittels einer Kühlvorrichtung befüllt mit einem Kühlmittel, üblicherweise einer Kühlflüssigkeit, beispielsweise Wasser, zu kühlen.

Aus der WO 2020239472 A1 ist eine Energiespeichervorrichtung mit einem Gehäuse bestehend aus zwei sich gegenüberliegenden Seitenwänden und einem Modul bekannt, wobei das Modul zwei sich gegenüberliegende Kühlwände, die zwischen den Seitenwänden angeordnet sind, eine Kühlplatte, auf der die Kühlwände angeordnet sind, mehrere Energiespeicher, die zwischen den Kühlwänden und auf der Kühlplatte angeordnet sind, und entsprechende Druckelemente aufweist, die zwischen den Energiespeichern angeordnet sind, mit denen die Energiespeicher jeweils gegen die angrenzende Kühlwand gepresst werden.

KR102263291B1 offenbart ein Energiespeichermodul gemäß des Oberbegriffs des Anspruchs 1.

Eine solche Energiespeicheranordnung ist vergleichsweise groß und weist eine sehr komplexe Tragkonstruktion mit einer zentralen Fronttragplatte sowie ein zentrales Kühlsystem auf. Alle Energiespeicher werden mittels der zentralen Fronttragplatte gehalten und über das zentrale Kühlsystem gekühlt. Dies ist nachteilig, da zu Wartungszwecken, insbesondere bei einem Austausch defekter Batteriezellen, demzufolge zuerst das Kühlsystem vollständig entleert und die Kühlflüssigkeit, beispielsweise Wasser, abgelassen und im Anschluss die Energiespeicheranordnung zumindest bis zur Ebene mit der defekten Batteriezelle nahezu vollständig demontiert werden muss, wodurch die Wartung, insbesondere ein Austausch defekter Batteriezellen, sehr aufwändig und somit sehr kostenintensiv ist.

Der Erfindung liegt die Aufgabe zugrunde, ein Energiespeichermodul und eine Energiespeicheranordnung mit Energiespeichermodul(en) anzugeben, die wesentlich einfacher konstruiert sind, dadurch geringeren Platzbedarf benötigen und deren Sicherheit verbessert und deren Störanfälligkeit verringert wird. Eine weitere Aufgabe der Erfindung ist es, ein Verfahren anzugeben, mit welchem der Austausch eines solchen Energiespeichermoduls einer entsprechenden Energiespeicheranordnung stark vereinfacht werden kann.

Gelöst werden die Aufgaben durch die Merkmale des unabhängigen Patentanspruchs 1 sowie der nebengeordneten Ansprüche 4, 12 and 14.

Weiterbildungen und Ausgestaltungen der Erfindung finden sich in den Merkmalen der abhängigen Patentansprüche wieder.

Dazu weist das erfindungsgemäße Energiespeichermodul zwei sich gegenüberliegende Seitenprofile, wenigstens zwei zueinander parallele Kühlplatten, die zwischen den Seitenprofilen angeordnet und mittels erster Verbindungselemente mit den Seitenprofilen mechanisch stabil verbunden sind, und wenigstens einen Energiespeicher auf, der zwischen den wenigstens zwei Kühlplatten angeordnet ist, wobei der wenigstens eine Energiespeicher sich auf wenigstens eine der Kühlplatten abstützt.

Die erfindungsgemäße Lösung hat den Vorteil, dass ein solches Energiespeichermodul aus vorgefertigten, in beliebiger Anzahl reproduzierbaren, jeweils gleichen Teilen zusammenstellbar ist und somit sehr einfach und schnell zusammengefügt und als Ganzes verbaut werden kann. Dabei sind die entsprechenden Energiespeicher sehr einfach zwischen den Kühlplatten anordenbar, zugänglich und verschaltbar. Die Anzahl sowie die Ausmaße, insbesondere die Länge der Kühlplatten und somit auch die Anzahl der zu kühlenden Energiespeicher kann dabei je nach Bedarf individuell nahezu beliebig angepasst, beispielsweise erweitert, bzw. festgelegt werden. Die hiermit einhergehende notwendige Anpasssung, beispielsweise Verlängerung, der entsprechenden Seitenprofile ist fertigungstechnisch ebenfalls problemlos möglich, da als Seitenprofile bevorzugt sehr leicht herstellbare bzw. bearbeitbare Strangpressprofile verwendet werden. Selbstverständlich ist die Verwendung von sinnvollen Alternativen hierzu ebenfalls ohne Einschränkung möglich.

Gemäß der Erfindung weist jedes Seitenprofil am oberen und am unteren Ende jeweils eine Nut auf, die sich horizontal wenigstens teilweise über die gesamte Länge des Seitenprofils erstreckt, wobei jedes Seitenprofil zwei Gegen-Nuten aufweist, welche durch die jeweiligen Nuten ausgebildet werden. Besonders bevorzugt ist eine der beiden Nuten eines Seitenprofils auf der Seite des Seitenprofils angebracht ist, die den Kühlplatten abgewandt ist, und die jeweils andere Nut auf der Seite des Seitenprofils angebracht, die den Kühlplatten zugewandt ist.

Als Gegen-Nut wird dabei der physisch verbleibende Materialanteil des jeweiligen Seitenprofils und als Nut die entsprechende, komplementäre materiallose Aussparung verstanden. Sowohl die Gegen-Nut als auch die Nut können sich über die gesamte Länge oder auch nur teilweise über die gesamte Länge des jeweiligen Seitenprofils erstrecken. Dabei kann bei Bedarf und, soweit sinnvoll, insbesondere die jeweilige Gegen-Nut beliebig oft und auf jeweils beliebiger Länge, beispielsweise für Kabeldurchführungen, unterbrochen werden, sodass eine solche Gegen-Nut entsprechende Unterbrechungen, also Materialaussparungen aufweist.

Grundsätzlich können sich die Nut am oberen Ende des Seitenprofils und die Nut am unteren Ende des Seitenprofils und somit auch die jeweils zugehörigen Gegen-Nuten auf verschiedenen Seiten des Seitenprofils befinden. In diesen Fällen können jeweils identisch aufgebaute Energiespeichermodule zum korrekten Auf- bzw. Übereinanderstapeln verwendet werden.

Die beiden Gegen-Nuten und somit die jeweils zugehörigen Nuten können sich jedoch jeweils auch auf einer Seite eines Seitenprofils, also die Gegen-Nuten auf der Seite des Seitenprofils, die den Kühlplatten abgewandt ist und dazu entsprechend die Nuten auf der Seite des Seitenprofils, die den Kühlplatten zugewandt ist, oder umgekehrt, befinden. In diesen Fällen werden zum korrekten Auf- bzw. Übereinanderstapeln abwechselnd Energiespeichermodule benötigt, bei denen sich die Nuten des jeweiligen Seitenprofils auf der Seite des Seitenprofils, die den Kühlplatten abgewandt ist, befinden und Energiespeichermodule, bei denen sich die Nuten des jeweiligen Seitenprofils auf der Seite des Seitenprofils, die den Kühlplatten zugewandt ist, befinden, d.h. für diese Fälle sind jeweils zumindest zwei verschiedenartig aufgebaute Energiespeichermodule, deren jeweilige Seitenprofile der Energiespeichermodule gegeneinander um 180° gedreht sind, notwendig.

In allen genannten Fällen lassen sich erfindungsgemäße Energiespeichermodule sehr einfach und sehr stabil auf- bzw. übereinanderstapeln und können ebenso einfach und schnell wieder voneinander gelöst werden. Bei der ersten genannten Variante ist dies aufgrund der Verwendung von Energiespeichermodulen mit identischer Bauweise noch einfacher möglich. Außerdem ist hierfür auch die Herstellung kostengünstiger, da keine verschieden aufgebauten Energiespeichermodule benötigt werden.

Zudem weist das erfindungsgemäße Energiespeichermodul einen in sich geschlossenen Kühlkreislauf auf, wobei der Kühlkreislauf vollständig abdichtbar ist. Das erfindungsgemäße Energiespeichermodul ist dabei vorteilhafterweise mit gefülltem Kühlkreislauf transportierbar.

Dabei können die jeweiligen Kühlverbindungen zwischen Seitenprofilen und Kühlplatten mittels beliebiger, üblicher Dichtungselemente derart realisiert werden, dass die Kühlplatten eines Energiespeichermoduls flüssigkeitsabdichtend mit den jeweiligen Seitenprofilen verbunden sind. Innerhalb der jeweiligen Kühlplatten kann die Kühlverteilung über eine beliebige Anzahl an Kühlkanälen realisiert werden. Dabei werden je nach Kühlanforderung, beispielsweise Kühlfluss nur in eine Richtung oder auch Hin- und Rückflusskreisläufe, in der Regel ein bis drei Kühlkanäle pro Kühlplatte bevorzugt.

Dadurch kann einerseits sehr einfach und schnell der Zu- und Ablauf zum Kühlkreislauf des jeweiligen Energiespeichermoduls getrennt und der entsprechende Kühlkreis verschlossen werden, ohne dass die Kühlflüssigkeit, beispielsweise das Kühlwasser, zeitintensiv abgelassen und der Kühlkreislauf später wieder aufwändig befüllt werden muss. Somit verbleibt die Kühlflüssigkeit im Kühlkreislauf des Energiespeichermoduls und das Kühlsystem bleibt insbesondere auch beim Transport des Energiespeichermoduls, beispielsweise zu Wartungszwecken, intakt. Darüber hinaus verbessert sich automatisch die Sicherheit erheblich, da dadurch der Austritt von Restkühlflüssigkeit, die nach dem Ablassen gewöhnlich immer im Kühlkreislauf des Energiespeichermoduls zurückbleibt, verhindert wird und somit die Restkühlflüssigkeit weder an die Energiespeicher gelangen noch an anderen Teilen entlanglaufen kann und somit diverse Probleme, z.B. Beschädigungen intakter Batteriezellen, vermieden werden.

Ein weiterer Aspekt der Erfindung betrifft eine Energiespeicheranordnung, die wenigstens zwei Energiespeichermodule nach einem der Ansprüche 1 bis 3 umfasst, wobei die wenigstens zwei Energiespeichermodule übereinander angeordnet sind und mittels zweiter Verbindungselemente mechanisch stabil miteinander verbunden sind.

Aufgrund der stapelbaren Modulbauweise der Energiespeichermodule wie oben beschrieben, sind solche Energiespeicheranordnungen durch Auf- bzw. Übereinanderstapeln sehr einfach und leicht herstellbar und können je nach Bedarf bzw. Anforderung individuell mittels der Anzahl der zu verwendenden Energiespeichermodule dimensioniert werden. Durch die zweiten Verbindungselemente, beispielsweise Schrauben, ist eine schnelle und stabile, mechanische Verbindung und auch ein schnelles Lösen dieser Verbindung gewährleistet.

Nach einer besonders bevorzugten Ausführungsform der erfindungsgemäßen Energiespeicheranordnung berühren die wenigstens zwei Energiespeichermodule ausschließlich die Seitenprofile unmittelbar. Durch den auf diese Weise entstehenden Abstand unmittelbar benachbarter Energiespeichermodule zwischen den Kühlwänden mit den darauf angeordneten Energiespeichern wird eine zusätzliche Luftkühlung zwischen den Energiespeichermodulen und damit der Energiespeicher ergänzend zu der Kühlung mittels der Kühlkreisläufe ermöglicht. Außerdem wird dadurch auch das Einleiten der Massen der Energiespeicher in das betreffende Fahrzeug, beispielsweise in den Wagenkasten eines Schienenfahrzeugs, erheblich erleichtert und dadurch vereinfacht.

Bevorzugt liegen die jeweils übereinander angeordneten Seitenprofile der wenigstens zwei Energiespeichermodule horizontal über der gesamten Länge wenigstens teilweise aufeinander auf. Besonders bevorzugt sind die Seitenprofile der wenigstens zwei Energiespeichermodule derart ausgestaltet, dass die jeweilige Nut des Seitenprofils des oberen Energiespeichermoduls von der jeweiligen Gegen-Nut des Seitenprofils des unteren Energiespeichermoduls im Wesentlichen vollständig ausgefüllt wird, wobei das Seitenprofil des oberen Energiespeichermoduls zumindest teilweise auf der Gegen-Nut des Seitenprofils des unteren Energiespeichermoduls aufliegt.

Somit lassen sich die Energiespeichermodule besonders einfach übereinander stapeln und es wird dabei gleichzeitig eine besonders stabile Auflage erreicht, wodurch insbesondere Beschädigungen durch Erschütterungen beim Fahren des entsprechenden Fahrzeugs reduziert werden.

Nach einer weiteren bevorzugten Ausführungsform der erfindungsgemäßen Energiespeicheranordnung liegen die jeweiligen Seitenprofile der wenigstens zwei Energiespeichermodule zumindest auf der, den Kühlplatten zugewandten Seite versatzlos aufeinander auf.

Sie bilden somit eine glatte Seite den Kühlplatten zugewandt, wodurch das Stapeln erleichtert wird, da ein mögliches Verhaken auf ein Minimum reduziert wird.

Nach einer weiteren bevorzugten Ausführungsform der erfindungsgemäßen Energiespeicheranordnung überlappen sich die jeweils übereinander angeordneten Seitenprofile der wenigstens zwei Energiespeichermodule zumindest teilweise. Bevorzugt sind dabei die wenigstens zwei Energiespeichermodule im Überlappungsbereich der Seitenprofile mittels der zweiten Verbindungselemente mechanisch stabil miteinander verbunden. Besonders bevorzugt verbinden die zweiten Verbindungselemente die jeweilige Gegen-Nut des Seitenprofils des oberen Energiespeichermoduls mit der jeweiligen Gegen-Nut des Seitenprofils des unteren Energiespeichermoduls kraftschlüssig und lösbar miteinander.

Somit sind die beiden jeweils aufeinanderliegenden Energiespeichermodule an definierter Stelle sehr einfach und effektiv kraftschlüssig mit den zweiten Verbindungselementen, beispielsweise Schrauben, miteinander verbindbar, wodurch insgesamt automatisch eine tragende bzw. selbsttragende Verbindung realisiert wird. Die Kraftübertragung zwischen den gestapelten Energiespeichermodulen erfolgt somit mittels Form und Kraftschluss. Das Lösen der entsprechenden Verbindungen, insbesondere zum Transport einzelner Energiespeichermodule, beispielsweise zur Reparatur oder zu Wartungszwecken, ist dementsprechend ebenso einfach und schnell möglich. Die Kraftübertragung zwischen der Energiespeicheranordnung als Ganzes und der tragenden Struktur des betreffenden Fahrzeugs wird bevorzugt über ein entsprechendes Verbindungselement, beispielsweise Blech, Profile etc. realisiert. Dadurch entsteht eine sehr stabile, kompakte und somit robuste Energiespeicheranordnung, die insbesondere auch gegenüber möglichen Beschädigungen durch Fahrbewegungen der entsprechenden Fahrzeuge sehr widerstandsfähig und störunanfällig ist.

Ein weiterer Aspekt der vorliegenden Erfindung betrifft ein Fahrzeug, welches zumindest eine Energiespeicheranordnung nach einem der Ansprüche 4 bis 11 aufweist. Gemäß einer Weiterbildung kann das Fahrzeug dabei als ein spurgebundenes Fahrzeug, also als ein Schienenfahrzeug, insbesondere als ein Triebzug und speziell als ein Batteriehybridzug, oder als ein Fahrzeug des Straßenverkehrs, beispielsweise als Elektro-LKW, oder als Wasserfahrzeug, beispielsweise als ein Frachtschiff, ausgestaltet sein.

Ein weiterer Aspekt der vorliegenden Erfindung betrifft ein Verfahren zum Austausch wenigstens eines Energiespeichermoduls einer Energiespeicheranordnung nach einem der Ansprüche 4 bis 11 eines Fahrzeugs nach Anspruch 12 oder 13, umfassend die Schritte
- Lösen der Verbindung des wenigstens einen auszutauschenden Energiespeichermoduls mit den unmittelbar verbundenen Energiespeichermodulen,
- Entfernen der Energiespeichermodule, die über dem wenigstens einen auszutauschenden Energiespeichermodul angeordnet sind,
- Entfernen des wenigstens einen auszutauschenden Energiespeichermoduls,
- Aufsetzen eines neuen Energiespeichermoduls, an die Stelle des entfernten, wenigstens einen auszutauschenden Energiespeichermoduls,
- Aufsetzen der entfernten, vorher über dem wenigstens einen auszutauschenden Energiespeichermodul angeordneten Energiespeichermodule auf das neue Energiespeichermodul und
- Schließen der Verbindung des neuen Energiespeichermoduls mit den unmittelbar verbundenen Energiespeichermodulen.

Mit dem erfindungsgemäßen Verfahren ist ein sehr leichter, problemloser und schneller Austausch eines defekten Energiespeichermoduls bzw. eines Energiespeichermoduls mit einem oder auch mehreren defekten Energiespeicher(n) möglich. Hierfür sind keine Halte- und/oder Abstützvorrichtungen notwendig, da die Energiespeicheranordnung im Wesentlichen flach und selbsttragend aufliegt. Dabei kann das betroffene Energiespeichermodul insbesondere unmittelbar vor Ort durch ein intaktes Energiespeichermodul ersetzt und somit die Energiespeicheranordnung wieder vervollständigt werden, sodass innerhalb kürzester Zeit die Energiespeicheranordnung wieder voll funktionsfähig ist und entsprechende Ausfall- bzw. Liegezeiten des betroffenen Fahrzeugs minimiert werden können. Das oder die betroffenen Energiespeichermodule können dabei separat repariert werden, beispielsweise durch den Austausch defekter Energiespeicher.

Nach einer besonders bevorzugten Ausführungsform des erfindungsgemäßen Verfahrens bleiben die, über dem wenigstens einen auszutauschenden Energiespeichermodul angeordneten Energiespeichermodule beim Entfernen mechanisch stabil miteinander verbunden.

Dadurch ist es noch einfacher und schneller möglich ein betroffenes Energiespeichermodul durch ein neues, intaktes Energiespeichermodul auszutauschen, da nur Verbindungen zu dessen unmittelbar verbundenen Energiespeichermodulen gelöst werden müssen, um das betroffene Energiespeichermodul zu entfernen. Alle sich darüber befindlichen Energiespeichermodule können untereinander verbunden bleiben - das Lösen deren Verbindungen untereinander ist nicht notwendig. Diese können festmontiert abgehoben werden, wodurch auch das Ablassen der Kühlflüssigkeit überflüssig ist und das Kühlsystem weiter funktionsfähig bleibt. Das neue, intakte Energiespeichermodul kann unmittelbar wieder montiert und eingesetzt werden. Somit ist nur ein minimaler Zeitaufwand zum Wechseln eines Energiespeichermoduls notwendig, so dass die betroffene Energiespeicheranordnung innerhalb sehr kurzer Zeit wieder voll funktionsfähig ist.

Zusammengefasst umfasst die erfindungsgemäße Energiespeicheranordnung je nach Bedarf wenigstens zwei oder mehrere Energiespeichermodule, die sehr einfach und schnell auf- bzw. übereinandergestapelt werden können und mittels Verbindungselementen, beispielsweise Schrauben, mechanisch stabil miteinander verbindbar sind. Die Energiespeichermodule umfassen dabei jeweils zwei sich gegenüberliegende Seitenprofile, je nach Bedarf wenigstens zwei oder mehrere zueinander parallele Kühlplatten, die zwischen den Seitenprofilen angeordnet und mittels weiterer Verbindungselemente mit den Seitenprofilen mechanisch stabil verbunden sind, und je nach Bedarf mehrere Energiespeicher, die zwischen den Kühlplatten angeordnet sind und mittels des Kühlkreislaufs des entsprechenden Energiespeichermoduls gekühlt werden. Mit dem erfindungsgemäßen Verfahren kann sehr schnell und einfach ein defektes Energiespeichermodul einer Energiespeicheranordnung ausgetauscht werden, ohne dass die Energiespeicheranordnung vollständig demontiert werden muss.

Im Weiteren werden bevorzugte Ausführungsbeispiele der Erfindung mit Bezugnahme auf die Zeichnungen näher erläutert. Es zeigen:
- Fig. 1: ein erfindungsgemäßes Energiespeichermodul,
- Fig. 2: eine Teilansicht eines Querschnitts eines erfindungsgemäßen Energiespeichermoduls,
- Fig. 3: eine Teilansicht eines Querschnitts bzgl. zwei aufeinandergestapelter, erfindungsgemäßer Energiespeichermodule,
- Fig. 4: eine Teilansicht eines Querschnitts einer weiteren Ausführungsform einer erfindungsgemäßen Energiespeicheranordnung,
- Fig. 5: eine Teilansicht eines erfindungsgemäßen Energiespeichermoduls schräg von oben und
- Fig. 6: eine erfindungsgemäße Energiespeicheranordnung.

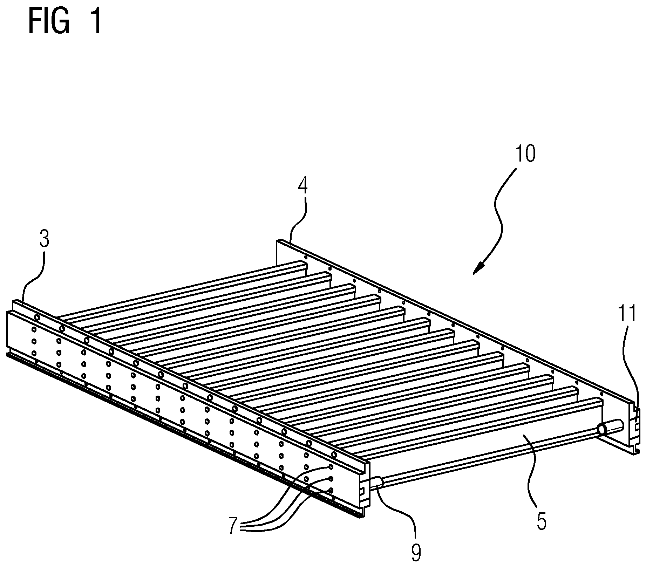

In den Figuren 1 bis 6 werden jeweils gleiche Bauteile mit den gleichen Bezugsziffern bezeichnet. Die Ausführungsformen können sich dabei ggf. unterscheiden.

Aus Gründen der Übersichtlichkeit sind in keiner der Figuren die zugehörigen Energiespeicher, beispielsweise Batterien, bzw. Batteriezellen, die sehr einfach zwischen den Kühlplatten anordenbar, zugänglich und verschaltbar sind, dargestellt.

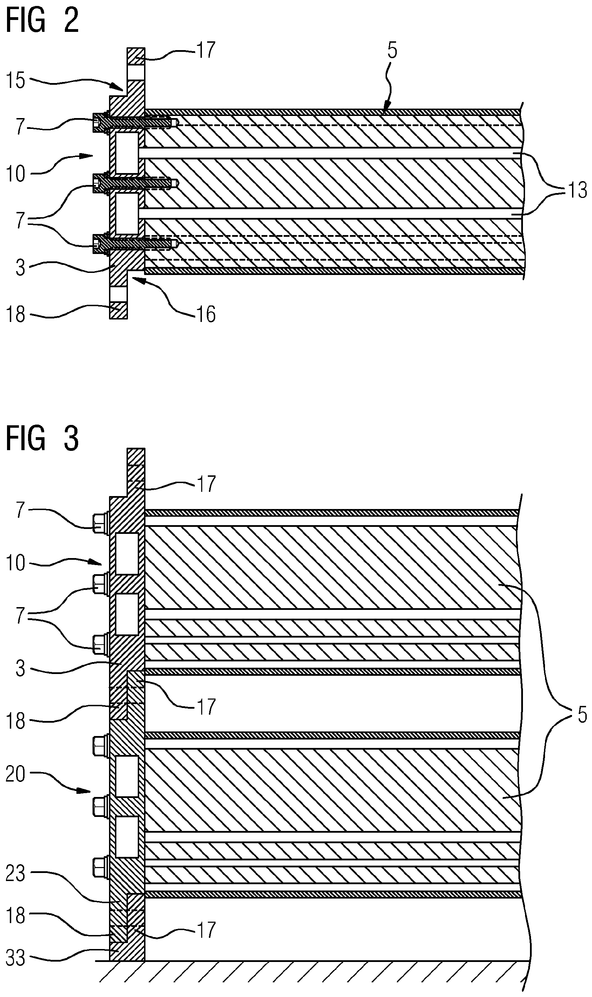

In den Figuren 2, 3 und 4 wird jeweils eine Teilansicht des bzw. der entsprechenden Energiemodule gezeigt, der nur die jeweiligen Seitenprofile 3, 23, 33 zeigt und beschreibt. Analoges gilt selbstverständlich auch für die nicht dargestellte, andere Seite der Energiespeichermodule, insbesondere deren zweite Seitenprofile.

Figur 1 zeigt ein erfindungsgemäßes Energiespeichermodul 10 bestehend aus zwei sich gegenüberliegenden, zueinander parallel verlaufenden Seitenprofilen 3, 4 und einer Vielzahl von zueinander parallelen Kühlplatten 5, die zwischen den Seitenprofilen 3, 4 senkrecht zu diesen angeordnet sind. Mittels erster Verbindungselemente 7, hier beispielsweise Schrauben, ist jede der Kühlplatten 5 mit den Seitenprofilen 3, 4 mechanisch stabil verbunden. Jede der Kühlplatten 5 ist mit jeweils drei Schrauben 7 mit den beiden Seitenprofilen 3, 4 verbunden, wobei die Schrauben 7, mit denen die Kühlplatten 5 mit dem Seitenprofil 4 verbunden sind, aus der vorliegenden Perspektive nicht sichtbar sind. Die Anzahl der hier verwendeten Verbindungselemente 7 ist beispielhaft und bezüglich der Erfindung nicht beschränkend. Des Weiteren zeigt Figur **1****,** dass jedes der Seitenprofile 3, 4 jeweils mit einem Adapter 9 und einer Abdichtung 11 ausgestattet ist. Mittels des Adapters 9 kann der hier nicht sichtbare, in sich geschlossene Kühlkreislauf des Energiespeichermoduls 10 an die entsprechende Kühlflüssigkeitszufuhr angeschlossen werden, wobei die entsprechende Kühlflüssigkeit, beispielsweise Wasser, unter entsprechendem Druck durch das Kühlsystem gepumpt wird. Dabei erfolgt der Zufluss beispielsweise über den Adapter 9 des Seitenprofils 3 und der Abfluss über den entsprechenden Adapter des Seitenprofils 4. Mittels der Abdichtungen 11 wird der Kühlkreislauf des Energiespeichermoduls 10 flüssigkeitsdicht geschlossen. Hierzu sind auch entsprechende, nicht sichtbare Abdichtungen jeweils am anderen Ende der Seitenprofile 3, 4 angebracht. Die Abdichtungen 11 verschließen den Kühlkreislauf in der Regel dauerhaft, beispielsweise durch Verschweißen. Es sind aber grundsätzlich auch lösbare Abdichtungen, beispielsweise Klemmverschlüsse, denkbar und möglich, solange diese Alternativen flüssigkeitsabdichtend sind, dies dauerhaft gewährleisten können und demzufolge der jeweilige Kühlkreislauf dauerhaft vollständig abgedichtet bleibt. Durch Verwendung geeignet ausgestatteter, handelsüblicher Adapter 9 wird der Kühlkreislauf nach Trennen der Kühlflüssigkeitszufuhr von den Adaptern 9, beispielsweise automatisch durch Selbstverschluss, auch an den Adaptern 9 verschlossen. Somit bleibt der Kühlkreislauf vollständig abgedichtet und das entsprechende Energiespeichermodul 10 kann als Ganzes auch mit gefülltem Kühlkreislauf transportiert werden, ohne dass die Kühlflüssigkeit ausläuft oder gar vorher zeitintensiv abgelassen und später der Kühlkreislauf wieder aufwändig befüllt werden muss. Somit verbleibt die Kühlflüssigkeit im Kühlkreislauf des Energiespeichermoduls 10 und das Kühlsystem bleibt insbesondere auch beim Transport des Energiespeichermoduls 10, beispielsweise zu Wartungszwecken, intakt. Darüber hinaus verbessert sich automatisch die Sicherheit erheblich, da dadurch der Austritt von Restkühlflüssigkeit, die nach dem Ablassen gewöhnlich immer im Kühlkreislauf des Energiespeichermoduls zurückbleibt, verhindert wird und somit die Restkühlflüssigkeit weder an die Energiespeicher gelangen, noch an anderen Teilen entlanglaufen kann und somit diverse Probleme, z.B. Beschädigungen intakter Batteriezellen, vermieden werden.

Das in Figur 1 gezeigte, erfindungsgemäße Energiespeichermodul 10 ist aus vorgefertigten Teilen zusammenstellbar und kann somit sehr einfach und schnell zusammengefügt und als Ganzes verbaut werden. Die Anzahl sowie die Ausmaße, insbesondere die Länge der Kühlplatten 5 und somit auch die Anzahl der zu kühlenden Energiespeicher kann dabei je nach Bedarf individuell nahezu beliebig angepasst, bzw. festgelegt werden. Die hierfür nötige Anpassung, beispielsweise Verlängerung der entsprechenden Seitenprofile 3, 4 ist fertigungstechnisch problemlos möglich, da als Seitenprofile 3, 4 bevorzugt sehr leicht herstellbare bzw. bearbeitbare Strangpressprofile verwendet werden können.

Selbstverständlich ist die Verwendung von sinnvollen Alternativen hierzu ebenfalls ohne Einschränkung möglich.

Die einzelnen Bestandteile eines erfindungsgemäßen Energiespeichermoduls sind in gewünschter Ausführungsform in beliebiger Anzahl reproduzierbar, sodass identisch aufgebaute Energiespeichermodule ebenfalls problemlos und entsprechend kostengünstig verfügbar sind.

Figur 2 zeigt eine Teilansicht eines Querschnitts des erfindungsgemäßen Energiespeichermoduls 10 aus Figur 1. In der Figur 2 wird im Detail der prinzipielle erfindungsgemäße Aufbau eines Seitenprofils 3 und dessen mechanisch stabile Verbindung mit den Kühlplatten 5 dargestellt. Analoges gilt für die entsprechende, nicht dargestellte Verbindung der Kühlplatten 5 mit dem zweiten Seitenprofil 4. Das hier gezeigte Seitenprofil 3 weist jeweils am oberen und am unteren Ende eine Nut 15, 16 sowie eine entsprechende Gegen-Nut 17, 18 auf, wobei das obere und untere Ende des Seitenteils 3 gespiegelt ausgestaltet ist, d.h. bezüglich der Stelle am oberen Ende des Seitenprofils 3, an dem sich die Gegen-Nut 17 befindet, befindet sich an der entsprechenden Stelle am unteren Ende die Nut 16 und bezüglich der Stelle am oberen Ende des Seitenprofils 3, an dem sich die Nut 15 befindet, befindet sich an der entsprechenden Stelle am unteren Ende die Gegen-Nut 18. Als Gegen-Nut 17, 18 wird dabei der physisch verbleibende Materialanteil des Seitenprofils 3 und als Nut 15, 16 die entsprechende, komplementäre materiallose Aussparung verstanden. Sowohl die jeweiligen Gegen-Nuten 17, 18 als auch die komplementären Nuten 15, 16 erstrecken sich je nach Anforderung über die gesamte Länge oder zumindest teilweise über die gesamte Länge des Seitenprofils 3. Eine Unterbrechung insbesondere der durchgängigen Gegen-Nuten 17, 18 (hier nicht dargestellt), beispielsweise für Kabeldurchführungen, ist je nach Anforderung beliebig oft und auf jeweils beliebiger Länge möglich, sodass die entsprechenden Gegen-Nuten 17, 18 an diesen Stellen Materialaussparungen aufweisen.

In der Ausführungsform gemäß Figur 2 ist die am oberen Ende des Seitenprofils 3 befindliche Gegen-Nut 17 auf der Seite des Seitenprofils 3 angebracht, die den Kühlplatten 5 zugewandt ist und die am unteren Ende des Seitenprofils 3 befindliche Gegen-Nut 18 auf der Seite des Seitenprofils 3 angebracht, die den Kühlplatten 5 abgewandt ist. Die Anordnung der jeweils zugehörigen Nut 15 bzw. 16 ist dazu komplementär. Solche Seitenprofile lassen sich demzufolge sehr einfach, schnell und stabil auf- bzw. übereinanderstapeln, bzw. auch wieder entfernen. Somit können identisch aufgebaute Energiespeichermodule zum korrekten Auf- bzw. Übereinanderstapeln verwendet werden.

Daneben sind selbstverständlich alle möglichen anderen Ausführungsformen möglich (hier nicht dargestellt):
- Die am oberen Ende des Seitenprofils befindliche Gegen-Nut ist auf der Seite des Seitenprofils angebracht, die den Kühlplatten abgewandt ist und die am unteren Ende des Seitenprofils befindliche Gegen-Nut ist auf der Seite des Seitenprofils angebracht, die den Kühlplatten zugewandt ist. Die Anordnung der jeweils zugehörigen Nuten ist dazu wieder komplementär. Auch hierfür können identisch aufgebaute Energiespeichermodule zum korrekten Auf- bzw. Übereinanderstapeln verwendet werden.
- Die beiden Gegen-Nuten und somit die jeweils zugehörigen Nuten befinden sich auf einer Seite eines Seitenprofils, also die Gegen-Nuten auf der Seite des Seitenprofils, die den Kühlplatten abgewandt ist und dazu entsprechend die Nuten auf der Seite des Seitenprofils, die den Kühlplatten zugewandt ist, oder umgekehrt. In diesen Fällen werden zum korrekten Aufeinanderstapeln abwechselnd Seitenprofile benötigt, die gegeneinander um 180° gedreht sind. Diese Fälle erfordern demzufolge zumindest jeweils zwei verschiedenartig aufgebaute Energiespeichermodule, die zum korrekten Auf- bzw. Übereinanderstapeln abwechselnd verwendet werden müssen.

In allen genannten Fällen lassen sich erfindungsgemäße Energiespeichermodule sehr einfach und sehr stabil auf- bzw. übereinanderstapeln und können ebenso einfach und schnell wieder voneinander gelöst werden. Bei den zuerst genannten Varianten ist dies allerdings aufgrund der Verwendung von Energiespeichermodulen mit identischer Bauweise noch einfacher möglich. Außerdem ist hierfür auch die Herstellung kostengünstiger, da keine verschieden aufgebauten Energiespeichermodule benötigt werden.

Die Figur 2 zeigt weiter einen Teilausschnitt eines Längsschnitts durch eine Kühlplatte 5 mit zwei Kühlkanälen 13, die in den Teil des Kühlsystems münden, der im Seitenprofil 3 verläuft. Die jeweiligen Kühlverbindungen im Übergangsbereich zwischen Seitenprofil 3 und Kühlplatte 5, respektive der gezeigten Kühlkanäle 13 werden dabei mittels beliebiger, üblicher Dichtungselemente derart realisiert, dass die Kühlplatte 5 des Energiespeichermoduls 10 flüssigkeitsabdichtend mit dem Seitenprofil 3 verbunden ist. Zusätzlich wird dies durch die drei Verbindungselemente 7, beispielsweise Schrauben, mit denen die mechanisch stabile Verbindung zwischen dem Seitenprofil 3 und der Kühlplatte 5 hergestellt wird, unterstützt. Neben der in Figur 2 gezeigten Ausführungsform kann innerhalb der jeweiligen Kühlplatten die Kühlverteilung selbstverständlich über eine beliebige Anzahl an Kühlkanälen realisiert werden. Dabei werden in der Regel je nach Kühlanforderung, beispielsweise Kühlfluss nur in eine Richtung oder auch Hin- und Rückflusskreisläufe, ein bis drei Kühlkanäle pro Kühlplatte bevorzugt. Die Anzahl der Kühlverbindungen zwischen einer Kühlplatte und einem Seitenprofil ist dabei nicht direkt abhängig von der Anzahl der Kühlkanäle, die in der Kühlplatte realisiert sind, so können beispielsweise 3 Kühlkanäle in der Kühlplatte, aber nur eine Kühlverbindung, die in den Teil des Kühlsystems mündet, der im Seitenprofil 3 bzw. analog dazu im Seitenprofil 4 verläuft, realisiert sein. Die Anzahl der Kühlverbindungen ist dabei in der Regel kleiner oder gleich der Anzahl der realisierten Kühlkanäle in der betreffenden Kühlplatte.

Figur 3 zeigt eine Teilansicht eines Querschnitts bzgl. zwei auf- bzw. übereinandergestapelter, erfindungsgemäßer Energiespeichermodule 10 und 20, die somit bereits eine erste Ausführungsform einer erfindungsgemäßen Energiespeicheranordnung bilden. Hiermit wird insbesondere das bereits angesprochene Stapelprinzip verdeutlicht. Das Energiespeichermodul 20 ist identisch zu dem in Figur 2 bereits beschriebenen Energiespeichermodul 10 ausgeführt. In der Figur 3 ist bei beiden Energiespeichermodulen 10 und 20 jeweils nur der Teil vom Kühlsystem sichtbar, der in den Seitenprofilen 3 bzw. 23 verläuft. Aufgrund des identischen Aufbaus der beiden Energiespeichermodule 10 und 20 greifen beim Auf- bzw. Übereinanderstapeln jeweils die Gegen-Nut 17 am oberen Ende der Seitenprofile 3, 23, 33 der jeweils unteren Energiespeichermodule 10, 20 und die Gegen-Nut 18 am unteren Ende der Seitenprofile 3, 23, 33 der jeweils oberen Energiespeichermodule 10, 20 ineinander und füllen die jeweilige Nut in der vorliegenden Ausführungsform vollständig aus. Somit überlappen sich die jeweils übereinander angeordneten Seitenprofile 3, 23, 33 und das Seitenprofil 3 bzw. 23 des oberen Energiespeichermoduls 10 bzw. 20 liegt auf der Gegen-Nut 17 des Seitenprofils 23 bzw. 33 des unteren Energiespeichermoduls auf. Die Seitenprofile 3, 23, 33 liegen demzufolge ersichtlich versatzlos aufeinander auf und bilden somit eine glatte Seite sowohl hinsichtlich der, den Kühlplatten 5 zugewandten, als auch der, den Kühlplatten 5 abgewandten Seite, wodurch das Stapeln weiter erleichtert wird, da ein mögliches Verhaken auf ein Minimum reduziert wird.

Somit lassen sich die Energiespeichermodule 10 und 20 besonders einfach auf- bzw. übereinanderstapeln und es wird dabei gleichzeitig eine besonders stabile Auflage erreicht, wodurch Beschädigungen durch Erschütterungen beim Fahren des betreffenden Fahrzeugs reduziert werden.

Wie in der Figur 3 dargestellt, berühren sich die zwei Energiespeichermodule 10, 20 gegenseitig direkt ausschließlich mittels der jeweiligen Seitenprofile 3, 23, 33. Durch den auf diese Weise entstehenden Abstand zwischen den unmittelbar benachbarten Energiespeichermodulen 10, 20 zwischen den jeweiligen Kühlwänden 5 mit den darauf angeordneten, hier nicht dargestellten Energiespeichern, wird eine entsprechende zusätzliche Luftkühlung zwischen den Energiespeichermodulen 10 und 20 und damit der Energiespeicher ergänzend zu den jeweiligen Kühlkreisläufen in den beiden Energiespeichermodulen 10, 20 ermöglicht. Außerdem wird dadurch auch das Einleiten der Massen der Energiespeicher in das betreffende, zugeordnete Fahrzeug, beispielsweise in den Wagenkasten eines Schienenfahrzeugs erheblich erleichtert und dadurch vereinfacht.

Für eine mechanisch stabile Verbindung werden die zwei Energiespeichermodule 10 und 20 im Überlappungsbereich der Seitenprofile 3, 23, 33 mittels zweiter Verbindungselemente (hier nicht dargestellt), beispielsweise Schrauben, miteinander verbunden. Die Figur 3 zeigt beispielhaft entsprechende, gestrichelt dargestellte Verbindungsstellen bei der jeweiligen Gegen-Nut 18 des Seitenprofils 3, 23 des oberen Energiespeichermoduls 10, 20 und der jeweiligen Gegen-Nut 17 des Seitenprofils 23, 33 des unteren Energiespeichermoduls, an denen die Energiespeichermodule 10 und 20 miteinander verbunden werden können.

Somit sind die beiden Energiespeichermodule 10 und 20 an definierter Stelle sehr einfach und effektiv kraftschlüssig mittels den zweiten Verbindungselementen, beispielsweise Schrauben, miteinander verbindbar, wodurch insgesamt automatisch eine tragende bzw. selbsttragende Verbindung realisiert wird. Das Lösen der entsprechenden Verbindungen, insbesondere zum Transport einzelner Energiespeichermodule, beispielsweise zur Reparatur oder zu Wartungszwecken, ist dementsprechend ebenso einfach und schnell möglich. Somit entsteht eine sehr stabile, kompakte und robuste erfindungsgemäße Energiespeicheranordnung, die insbesondere auch gegenüber möglichen Beschädigungen durch Fahrbewegungen der entsprechenden Fahrzeuge sehr widerstandsfähig und störunanfällig ist.

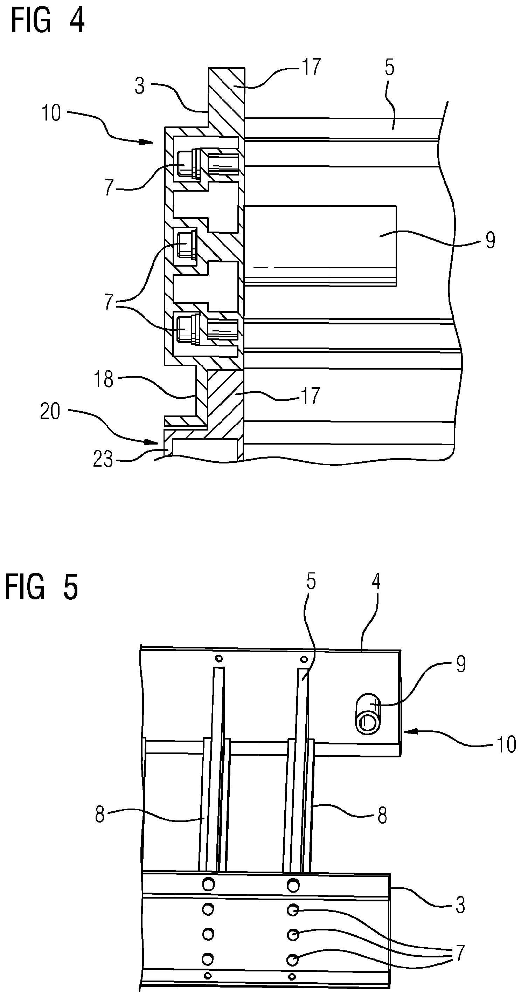

Figur 4 zeigt eine Teilansicht eines Querschnitts einer weiteren Ausführungsform einer erfindungsgemäßen Energiespeicheranordnung. Gezeigt wird insbesondere die Verwendung eines entsprechend hergestellten Strangpressprofils als Seitenprofil 3 bzw. 23 der Energiespeichermodule 10 bzw. 20 mit verschiedenen, ausgeführten Hohlräumen aus Gewichtsgründen. So sind die Schrauben zur Herstellung einer mechanisch stabilen Verbindung des Seitenprofils 3 mit der Kühlplatte 5 in entsprechenden Hohlräumen versenkt angebracht. Des Weiteren überlappen sich die übereinander angeordneten Seitenprofile 3, 23 der Energiespeichermodule 10 und 20 nur teilweise. Außerdem ist in der Figur 4 im Detail Adapter 9 dargestellt, welcher beispielhaft die Verbindung zum Kühlsystem des Energiespeichermoduls 10 zeigt. Hier ist wiederum nur der Teil vom Kühlsystem sichtbar, der im Seitenprofil 3 des Energiespeichersystems 10 verläuft. Darüber hinaus weist auch diese Ausführungsform selbstverständlich alle weiteren erfindungsgemäßen Vorteile wie oben beschrieben auf.

Figur 5 zeigt eine Teilansicht des Energiespeichermoduls 10 aus der Figur 1 schräg von oben. Aus dieser Perspektive sind die Zwischenräume zwischen den Kühlplatten 5 einsehbar und somit Auflagen 8 ersichtlich, die sich seitlich beidseits am unteren Ende der Kühlplatten 5 befinden und auf denen die zugehörigen Energiespeicher, beispielsweise Batterien, bzw. Batteriezellen, zwischen den Kühlplatten 5 abgelegt bzw. angebracht und gekühlt werden, welche wie bereits ausgeführt aus Gründen der Übersichtlich7keit nicht dargestellt sind.

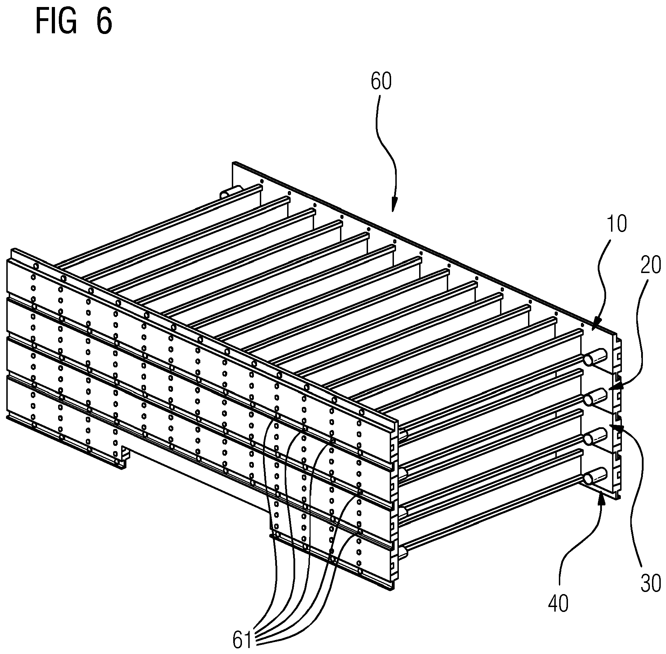

Figur 6 zeigt eine erfindungsgemäße Energiespeicheranordnung 60 aus vier übereinander angeordneten und gestapelten, im Wesentlichen identischen Energiespeichermodulen 10, 20, 30, 40, die mittels einer Vielzahl zweiter Verbindungselemente 61, beispielsweise Schrauben mechanisch stabil miteinander verbunden sind. Figur 6 zeigt, dass aufgrund der stapelbaren Modulbauweise der Energiespeichermodule 10, 20, 30, 40 wie oben beschrieben, eine Energiespeicheranordnung 60 durch Auf- bzw. Übereinanderstapeln sehr einfach und leicht herstellbar ist und je nach Bedarf bzw. Anforderung mit zusätzlichen Energiespeichermodulen sehr leicht erweiterbar ist, also mittels der Anzahl der zu verwendenden Energiespeichermodule individuell dimensioniert werden kann. Durch die zweiten Verbindungselemente 61, beispielsweise Schrauben, ist dabei eine schnelle und stabile mechanische Verbindung und auch ein schnelles Lösen dieser Verbindung gewährleistet.

Die Kraftübertragung zwischen der Energiespeicheranordnung 60 als Ganzes und der tragenden Struktur des betreffenden Fahrzeugs wird bevorzugt über ein hier nicht dargestelltes entsprechendes Verbindungselement, beispielsweise Blech, Profile etc. realisiert. Dadurch entsteht eine sehr stabile, kompakte und somit robuste Energiespeicheranordnung, die insbesondere auch gegenüber möglichen Beschädigungen durch Fahrbewegungen der entsprechenden Fahrzeuge sehr widerstandsfähig und störunanfällig ist.

## Patentansprüche

1. Energiespeichermodul (10, 20, 30, 40), umfassend
- zwei sich gegenüberliegende Seitenprofile (3, 4, 23, 33),
- wenigstens zwei zueinander parallele Kühlplatten (5), die zwischen den Seitenprofilen (3, 4) angeordnet und mittels erster Verbindungselemente (7) mit den Seitenprofilen (3, 4, 23, 33) mechanisch stabil verbunden sind, und
- wenigstens einen Energiespeicher, der zwischen den wenigstens zwei Kühlplatten (5) angeordnet ist, wobei der wenigstens eine Energiespeicher sich auf wenigstens eine der Kühlplatten (5) abstützt,
**dadurch gekennzeichnet, dass**
das Energiespeichermodul (10, 20, 30, 40) einen in sich geschlossenen Kühlkreislauf aufweist, wobei der Kühlkreislauf in den zwei sich gegenüberliegenden Seitenprofilen (3, 4, 23, 33) und den wenigstens zwei zueinander parallelen Kühlplatten (5) verläuft, wobei der Kühlkreislauf zum Kühlen eine Kühlflüssigkeit aufweist, und wobei der Kühlkreislauf vollständig abdichtbar ist, und
wobei jedes Seitenprofil (3, 4, 23, 33) am oberen und am unteren Ende jeweils eine Nut (15, 16) aufweist, die sich wenigstens teilweise über die gesamte Länge des Seitenprofils (3, 4, 23, 33) erstreckt, wobei jedes Seitenprofil (3, 4, 23, 33) zwei Gegen-Nuten (17, 18) aufweist, welche durch die jeweiligen zwei Nuten (15, 16) ausgebildet sind.

2. Energiespeichermodul (10, 20, 30, 40) nach Anspruch **1,**
**dadurch gekennzeichnet, dass**
eine der beiden Nuten (15, 16) eines Seitenprofils (3, 4, 23, 33) auf der Seite des Seitenprofils (3, 4, 23, 33) angebracht ist, die den Kühlplatten (5) abgewandt ist, und die jeweils andere Nut (15, 16) auf der Seite des Seitenprofils (3, 4, 23, 33) angebracht ist, die den Kühlplatten (5) zugewandt ist.

3. Energiespeichermodul (10, 20, 30, 40) nach Anspruch 1 oder 2,
**dadurch gekennzeichnet, dass**
das Energiespeichermodul (10, 20, 30, 40) mit gefülltem Kühlkreislauf transportierbar ist.

4. Energiespeicheranordnung (60) umfassend wenigstens zwei Energiespeichermodule (10, 20, 30, 40) nach einem der Ansprüche 1 bis 3,
**dadurch gekennzeichnet, dass**
die wenigstens zwei Energiespeichermodule (10, 20, 30, 40) übereinander angeordnet sind und mittels zweiter Verbindungselemente (61) mechanisch stabil miteinander verbunden sind.

5. Energiespeicheranordnung (60) nach Anspruch 4,
**dadurch gekennzeichnet, dass** die wenigstens zwei Energiespeichermodule (10, 20, 30, 40) ausschließlich die Seitenprofile (3, 4, 23, 33) unmittelbar berühren.

6. Energiespeicheranordnung (60) nach Anspruch 4 oder 5,
**dadurch gekennzeichnet, dass**
die jeweils übereinander angeordneten Seitenprofile (3, 4, 23, 33) der wenigstens zwei Energiespeichermodule (10, 20, 30, 40) über der gesamten Länge wenigstens teilweise aufeinander aufliegen.

7. Energiespeicheranordnung (60) nach einem der Ansprüche 4 bis 6,
**dadurch gekennzeichnet, dass**
die Seitenprofile (3, 4, 23, 33) der wenigstens zwei Energiespeichermodule (10, 20, 30, 40) derart ausgestaltet sind,
dass die jeweilige Nut (15, 16) des Seitenprofils (3, 4, 23, 33) des oberen Energiespeichermoduls (10, 20, 30, 40) von der jeweiligen Gegen-Nut (17, 18) des Seitenprofils (3, 4, 23, 33) des unteren Energiespeichermoduls (10, 20, 30, 40) im Wesentlichen vollständig ausgefüllt wird, wobei das Seitenprofil (3, 4, 23, 33) des oberen Energiespeichermoduls (10, 20, 30, 40) zumindest teilweise auf der Gegen-Nut (17, 18) des Seitenprofils (3, 4, 23, 33) des unteren Energiespeichermoduls (10, 20, 30, 40) aufliegt.

8. Energiespeicheranordnung (60) nach einem der Ansprüche 4 bis 7,
**dadurch gekennzeichnet, dass**
die jeweiligen Seitenprofile (3, 4, 23, 33) der wenigstens zwei Energiespeichermodule (10, 20, 30, 40) zumindest auf der, den Kühlplatten (5) zugewandten Seite versatzlos aufeinander aufliegen.

9. Energiespeicheranordnung (60) nach einem der Ansprüche 4 bis 8,
**dadurch gekennzeichnet, dass**
sich die jeweils übereinander angeordneten Seitenprofile (3, 4, 23, 33) der wenigstens zwei Energiespeichermodule (10, 20, 30, 40) zumindest teilweise überlappen.

10. Energiespeicheranordnung (60) nach einem der Ansprüche 4 bis 9,
**dadurch gekennzeichnet, dass**
die wenigstens zwei Energiespeichermodule (10, 20, 30, 40) im Überlappungsbereich der Seitenprofile (3, 4, 23, 33) mittels der zweiten Verbindungselemente (61) mechanisch stabil miteinander verbindbar sind.

11. Energiespeicheranordnung (60) nach Anspruch 10,
**dadurch gekennzeichnet, dass**
die zweiten Verbindungselemente (61) die jeweilige Gegen-Nut (17, 18) des Seitenprofils (3, 4, 23, 33) des oberen Energiespeichermoduls (10, 20, 30, 40) mit der jeweiligen Gegen-Nut (17, 18) des Seitenprofils (3, 4, 23, 33) des unteren Energiespeichermoduls (10, 20, 30, 40) kraftschlüssig und lösbar miteinander verbinden.

12. Fahrzeug mit zumindest einer Energiespeicheranordnung (60) nach einem der Ansprüche 4 bis 11.

13. Fahrzeug nach Anspruch 12, wobei das Fahrzeug ein Schienenfahrzeug ist.

14. Verfahren zum Austausch wenigstens eines Energiespeichermoduls (10, 20, 30, 40) einer Energiespeicheranordnung (60) nach einem der Ansprüche 4 bis 11 eines Fahrzeugs nach Anspruch 12 oder 13 , umfassend die Schritte
- Lösen der Verbindung des wenigstens einen auszutauschenden Energiespeichermoduls (10, 20, 30, 40) mit den unmittelbar verbundenen Energiespeichermodulen (10, 20, 30, 40),
- Entfernen der Energiespeichermodule (10, 20, 30, 40), die über dem wenigstens einen auszutauschenden Energiespeichermodul (10, 20, 30, 40) angeordnet sind,
- Entfernen des wenigstens einen auszutauschenden Energiespeichermoduls (10, 20, 30, 40),
- Aufsetzen eines neuen Energiespeichermoduls (10, 20, 30, 40), an die Stelle des entfernten, wenigstens einen auszutauschenden Energiespeichermoduls (10, 20, 30, 40),
- Aufsetzen der entfernten, vorher über dem wenigstens einen auszutauschenden Energiespeichermodul (10, 20, 30, 40) angeordneten Energiespeichermodule (10, 20, 30, 40) auf das neue Energiespeichermodul (10, 20, 30, 40) und
- Schließen der Verbindung des neuen Energiespeichermoduls (10, 20, 30, 40) mit den unmittelbar verbundenen Energiespeichermodulen (10, 20, 30, 40).

15. Verfahren nach Anspruch 14
**dadurch gekennzeichnet, dass**
die, über dem wenigstens einen auszutauschenden Energiespeichermodul (10, 20, 30, 40) angeordneten Energiespeichermodule (10, 20, 30, 40), beim Entfernen mechanisch stabil miteinander verbunden bleiben.

## Claims

1. Energy storage module (10, 20, 30, 40), comprising
- two mutually opposing side profiles (3, 4, 23, 33),
- at least two cooling plates (5) which are in parallel with one another, are arranged between the side profiles (3, 4) and are connected to the side profiles (3, 4, 23, 33) in a mechanically stable manner by means of first connecting elements (7), and
- at least one energy storage unit, which is arranged between the at least two cooling plates (5), wherein the at least one energy storage unit is supported on at least one of the cooling plates (5),
**characterised in that**
the energy storage module (10, 20, 30, 40) has a self-contained cooling circuit, wherein the cooling circuit runs in the two mutually opposing side profiles (3, 4, 23, 33) and the at least two cooling plates (5) which are in parallel with one another, wherein the cooling circuit has a cooling fluid for cooling, and wherein the cooling circuit can be fully sealed, and
wherein each side profile (3, 4, 23, 33) has a groove (15, 16) on the upper and on the lower end in each case, which extends at least partially over the entire length of the side profile (3, 4, 23, 33), wherein each side profile (3, 4, 23, 33) has two counter-grooves (17, 18), which are embodied by the respective two grooves (15, 16).

2. Energy storage module (10, 20, 30, 40) according to claim 1,
**characterised in that**
one of the two grooves (15, 16) of a side profile (3, 4, 23, 33) is attached to the side of the side profile (3, 4, 23, 33) that is facing away from the cooling plates (5), and the other groove (15, 16) in each case is attached to the side of the side profile (3, 4, 23, 33) that is facing towards the cooling plates (5).

3. Energy storage module (10, 20, 30, 40) according to claim 1 or 2,
**characterised in that**
the energy storage module (10, 20, 30, 40) can be transported with the cooling circuit filled.

4. Energy storage arrangement (60) comprising at least two energy storage modules (10, 20, 30, 40) according to one of claims 1 to 3,
**characterised in that**
the at least two energy storage modules (10, 20, 30, 40) are arranged one above the other and are connected to one another in a mechanically stable manner by means of second connecting elements (61).

5. Energy storage arrangement (60) according to claim 4,
**characterised in that**
the at least two energy storage modules (10, 20, 30, 40) exclusively touch the side profiles (3, 4, 23, 33) directly.

6. Energy storage arrangement (60) according to claim 4 or 5,
**characterised in that**
the side profiles (3, 4, 23, 33), which are arranged one above the other in each case, of the at least two energy storage modules (10, 20, 30, 40) rest at least partially against one another over the entire length.

7. Energy storage arrangement (60) according to one of claims 4 to 6,
**characterised in that**
the side profiles (3, 4, 23, 33) of the at least two energy storage modules (10, 20, 30, 40) are embodied in such a manner that the respective groove (15, 16) of the side profile (3, 4, 23, 33) of the upper energy storage module (10, 20, 30, 40) is substantially fully filled up by the respective counter-groove (17, 18) of the side profile (3, 4, 23, 33) of the lower energy storage module (10, 20, 30, 40), wherein the side profile (3, 4, 23, 33) of the upper energy storage module (10, 20, 30, 40) rests at least partially against the counter-groove (17, 18) of the side profile (3, 4, 23, 33) of the lower energy storage module (10, 20, 30, 40).

8. Energy storage arrangement (60) according to one of claims 4 to 7,
**characterised in that**
the respective side profiles (3, 4, 23, 33) of the at least two energy storage modules (10, 20, 30, 40) rest against one another, without an offset, at least on the side that faces towards the cooling plates (5).

9. Energy storage arrangement (60) according to one of claims 4 to 8,
**characterised in that**
the side profiles (3, 4, 23, 33), which are arranged one above the other in each case, of the at least two energy storage modules (10, 20, 30, 40) at least partially overlap.

10. Energy storage arrangement (60) according to one of claims 4 to 9,
**characterised in that**
in the overlapping region of the side profiles (3, 4, 23, 33), the at least two energy storage modules (10, 20, 30, 40) can be connected to one another in a mechanically stable manner by means of the second connecting elements (61).

11. Energy storage arrangement (60) according to claim 10,
**characterised in that**
the second connecting elements (61) connect the respective counter-groove (17, 18) of the side profile (3, 4, 23, 33) of the upper energy storage module (10, 20, 30, 40) to the respective counter-groove (17, 18) of the side profile (3, 4, 23, 33) of the lower energy storage module (10, 20, 30, 40) in a non-positive and detachable manner.

12. Vehicle with at least one energy storage arrangement (60) according to one of claims 4 to 11.

13. Vehicle according to claim 12, wherein the vehicle is a rail vehicle.

14. Method for replacing at least one energy storage module (10, 20, 30, 40) of an energy storage arrangement (60) according to one of claims 4 to 11 of a vehicle according to claim 12 or 13, comprising the steps
- detaching the connection of the at least one energy storage module (10, 20, 30, 40) to be replaced to the energy storage modules (10, 20, 30, 40) that are directly connected,
- removing the energy storage modules (10, 20, 30, 40) that are arranged via the at least one energy storage module (10, 20, 30, 40) to be replaced,
- removing the at least one energy storage module (10, 20, 30, 40) to be replaced,
- positioning a new energy storage module (10, 20, 30, 40), taking the place of the at least one energy storage module (10, 20, 30, 40) that has been removed,
- positioning the removed energy storage modules (10, 20, 30, 40), that were previously arranged via the at least one energy storage module (10, 20, 30, 40) to be replaced, on the new energy storage module (10, 20, 30, 40) and
- closing the connection of the new energy storage module (10, 20, 30, 40) to the energy storage modules (10, 20, 30, 40) that are directly connected.

15. Method according to claim 14,
**characterised in that**
the energy storage modules (10, 20, 30, 40) that are arranged via the at least one energy storage module (10, 20, 30, 40) to be replaced remain connected to one another in a mechanically stable manner during removal.

## Revendications

1. Module (10, 20, 30, 40) de stockage d'énergie, comprenant
- deux profilés (3, 4, 23, 33) latéraux opposés,
- au moins deux plaques (5) de refroidissement parallèles entre elles, qui sont disposées entre les profilés (3, 4) latéraux et qui sont assemblées d'une manière stable mécaniquement aux profilés (3, 4, 23, 33) latéraux au moyen de premiers éléments (7) d'assemblage, et
- au moins un accumulateur d'énergie, qui est disposé entre les au moins deux plaques (5) de refroidissement, dans lequel le au moins un accumulateur d'énergie s'appuie sur au moins l'une des plaques (5) de refroidissement,
**caractérisé en ce que**
le module (10, 20, 30, 40) de stockage d'énergie a un circuit de refroidissement en soi fermé, dans lequel le circuit de refroidissement s'étend dans les deux profilés (3, 4, 23, 33) latéraux opposés et dans les au moins deux plaques (5) de refroidissement parallèles entre elles, dans lequel le circuit de refroidissement a, pour le refroidissement, un liquide réfrigérant, et dans lequel le circuit de refroidissement peut être rendu complètement étanche, et
dans lequel chaque profilé (3, 4, 23, 33) latéral a, à l'extrémité haute et à l'extrémité basse, respectivement une rainure (15, 16), qui s'étend au moins en partie sur toute la longueur du profilé (3, 4, 23, 33) latéral, dans lequel chaque profilé (3, 4, 23, 33) latéral a deux rainures (17, 18) antagonistes, qui sont constituées par les deux rainures (15, 16) respectives.

2. Module (10, 20, 30, 40) de stockage d'énergie suivant la revendication 1,
**caractérisé en ce que** l'
une des deux rainures (15, 16) d'un profilé (3, 4, 23, 33) latéral est disposée sur la face du profilé (3, 4, 23, 33) latéral, qui n'est pas tournée vers les plaques (5) de refroidissement, et l'autre rainure (15, 16) respective est disposée sur la face du profilé (3, 4, 23, 33) latéral, qui est tournée vers les plaques (5) de refroidissement.

3. Module (10, 20, 30, 40) de stockage d'énergie suivant la revendication 1 ou 2,
**caractérisé en ce que**
le module (10, 20, 30, 40) de stockage d'énergie est transportable avec le circuit de refroidissement rempli.

4. Agencement (60) de stockage d'énergie comprenant au moins deux modules (10, 20, 30, 40) de stockage d'énergie suivant l'une des revendications 1 à 3,
**caractérisé en ce que**
les au moins deux modules (10, 20, 30, 40) de stockage d'énergie sont disposés l'un au-dessus de l'autre et sont assemblés entre eux, d'une manière stable mécaniquement, au moyen de deux éléments (61) d'assemblage.

5. Agencement (60) de stockage d'énergie suivant la revendication 4,
**caractérisé en ce que**
les au moins deux modules (10, 20, 30, 40) de stockage d'énergie touchent directement exclusivement les profilés (3, 4, 23, 33) latéraux.

6. Agencement (60) de stockage d'énergie suivant la revendication 4 ou 5,
**caractérisé en ce que**
les profilés (3, 4, 23, 33) latéraux disposés respectivement les uns sur les autres des au moins deux modules (10, 20, 30, 40) de stockage d'énergie, s'appliquent les uns aux autres au moins en partie sur toute la longueur.

7. Agencement (60) de stockage d'énergie suivant l'une des revendications 4 à 6,
**caractérisé en ce que**
les profilés (3, 4, 23, 33) latéraux des au moins deux modules (10, 20, 30, 40) de stockage d'énergie sont conformés, de manière à ce que la rainure (15, 16) respective du profilé (3, 4, 23, 33) latéral du module (10, 20, 30, 40) supérieur de stockage d'énergie, soit remplie sensiblement complètement par la rainure (17, 18) antagoniste respective du profilé (3, 4, 23, 33) latéral du module (10, 20, 30, 40) inférieur de stockage d'énergie, dans lequel le profilé (3, 4, 23, 33) du module (10, 20, 30, 40) supérieur de stockage d'énergie s'applique au moins en partie sur la rainure (17, 18) antagoniste du profilé (3, 4, 23, 33) latéral du module (10, 20, 30, 40) inférieur de stockage d'énergie.

8. Agencement (60) de stockage d'énergie suivant l'une des revendications 4 à 7,
**caractérisé en ce que**
les profilés (3, 4, 23, 33) latéraux respectifs des au moins deux modules (10, 20, 30, 40) de stockage d'énergie s'appliquent les uns sur les autres sans décalage au moins sur la face tournée vers les plaques (5) de refroidissement.

9. Agencement (60) de stockage d'énergie suivant l'une des revendications 4 à 8,
**caractérisé en ce que**
les profilés (3, 4, 23, 33) latéraux disposés les uns sur les autres respectivement des au moins deux modules (10, 20, 30, 40) de stockage d'énergie se chevauchent au moins en partie.

10. Agencement (60) suivant l'une des revendications 4 à 9, **caractérisé en ce que**
les au moins deux modules (10, 20, 30, 40) de stockage d'énergie peuvent, dans la partie de chevauchement des profilés (3, 4, 23, 33) latéraux, être assemblés entre eux d'une manière stable mécaniquement, au moyen des deuxièmes éléments (61) d'assemblage.

11. Agencement (60) suivant la revendication 10,
**caractérisé en ce que**
les deuxièmes éléments (61) d'assemblage relient entre eux, à coopération de force et de manière détachable, la rainure (17, 18) antagoniste respective du profilé (3, 4, 23, 33) latéral du module (10, 20, 30, 40) supérieur de stockage d'énergie à la rainure (17, 18) antagoniste respective du profilé (3, 4, 23, 33) latéral du module (10, 20, 30, 40) inférieur de stockage d'énergie.

12. Véhicule comprenant au moins un agencement (60) de stockage d'énergie suivant l'une des revendications 4 à 11.

13. Véhicule suivant la revendication 12, dans lequel le véhicule est un véhicule ferroviaire.

14. Procédé de remplacement d'au moins un module (10, 20, 30, 40) de stockage d'énergie d'un agencement (60) de stockage d'énergie suivant l'une des revendications 4 à 11 d'un véhicule suivant la revendication 12 ou 13, comprenant les stades
- défaire l'assemblage du au moins un module (10, 20, 30, 40) de stockage d'énergie à remplacer aux modules (10, 20, 30, 40) de stockage d'énergie assemblés directement,
- éloignement des modules (10, 20, 30, 40) de stockage d'énergie, qui sont disposés au-dessus du au moins un module (10, 20, 30, 40) à remplacer de stockage d'énergie,
- éloignement du au moins un module (10, 20, 30, 40) à remplacer de stockage d'énergie,
- pose d'un nouveau module (10, 20, 30, 40) de stockage d'énergie à l'emplacement du au moins un module (10, 20, 30, 40) à remplacer de stockage d'énergie, qui a été éloigné,
- pose du module (10, 20, 30, 40) de stockage d'énergie éloigné et disposé auparavant sur le au moins un module (10, 20, 30, 40) à remplacer de stockage d'énergie sur le nouveau module (10, 20, 30, 40) de stockage d'énergie et
- fermeture de l'assemblage du nouveau module (10, 20, 30, 40) de stockage d'énergie avec les modules (10, 20, 30, 40) assemblés directement de stockage d'énergie.

15. Procédé suivant la revendication 14,
**caractérisé en ce que**
les modules (10, 20, 30, 40) de stockage d'énergie, disposés sur le au moins un module (10, 20, 30, 40) à remplacer de stockage d'énergie restent, lors de l'éloignement, assemblés entre eux d'une manière stable mécaniquement.
